# EUROPEAN PATENT SPECIFICATION

(11) **EP 3 118 437 B1**
(45) Date of publication and mention of the grant of the patent: **24.02.2021**
(21) Application number: 16175261.3
(22) Date of filing: 20.06.2016
(51) Int. Cl.: F02C 7/262, F02C 9/28

(54) **GAS TURBINE ENGINE FUEL SCHEDULING**
BRENNSTOFFREGELUNG EINES GASTURBINENMOTORS
RÉGULATION DE CARBURANT DE MOTEUR À TURBINE À GAZ

(30) Priority: 16.07.2015 GB 201512414
(43) Date of publication of application: 18.01.2017
(73) Proprietor: Rolls-Royce plc, London N1 9FX (GB)
(72) Inventor: Stockwell, Mark, Derby, Derbyshire DE24 8BJ (GB)
(74) Representative: Rolls-Royce plc

(56) References cited:
- EP-A1- 0 399 692
- EP-A2- 2 184 466
- US-A- 3 811 273

## Description

The present disclosure concerns a gas turbine engine fuel scheduling. More specifically the disclosure concerns a method of controlling fuel flow for combustion in a gas turbine engine, a controller arranged to perform the method and a gas turbine engine comprising the controller. The disclosure may have particular application to engine in-flight windmill start procedures but is not intended to be limited to such implementations. Indeed the disclosure may have further application in other circumstances, including for instance in fuel flow scheduling during normal operation.

If it is desired to start an aero gas turbine engine in flight, e.g. following a flameout, a windmill restart is typically attempted. This uses on-rushing air through which the aircraft is passing to windmill the compressors and deliver air to the combustor. A sufficient quantity of fuel must also be delivered to the combustor in order for successful ignition. Fuel is typically pumped to the combustors by a fuel pump driven by a spool powered ancillary gearbox. Under certain flight conditions the windmilling effect of the on-rushing air may turn the relevant spool at a sufficient rate in order to pump sufficient fuel to the combustor for successful start. Where however the flight conditions tend towards a lower airspeed and/or lower altitude (denser air) the rotation rate of the relevant spool as a consequence of windmilling will be lower, and may therefore be insufficient for the delivery of the required quantity of fuel. As will be appreciated this may undesirably mean that as an aircraft descends a pilot is chasing an ever higher airspeed (requiring an ever increasing rate of descent) in order to achieve engine start.

The problem may be made worse where the fuel pump is deteriorated through in service use and/or fuel is used as a process fluid in other systems, e.g. fueldraulic control of turbine case cooling and/or air control valves. The latter may increase the quantity of fuel 'leaked' to other systems (rather than delivered to the combustor) and reduce spare capacity of the fuel pump. Solutions such as increasing pump capacity and/or other structural changes such as valves for selective isolation of systems using the fuel as a process fluid may be costly and add complexity.

EP2184466 describes a relight method where a nominal fuel delivery setting is higher than a desired fuel delivery rate. However, a further known problem following a successful relight is an over-fuelling of the engine potentially giving rise to a compressor stall. Specifically in order to provide an appropriate quantity of fuel for engine relight, a fuel metering valve may, upon engine re-light, be scheduled more open than is best suited to stable and controlled acceleration towards idle without risk of compressor stall. It is known therefore to reduce over fuelling following light up by scheduling a partial closing of the fuel metering valve. Nonetheless such existing over fuel reduction scheduling is relatively unreliable and unrefined.

EP 0 399 692 describes a fuel control system compares the rate of change of a high speed spool with values contained in a datum light-up schedule.

According to a first aspect there is provided a method of controlling fuel flow for combustion in a gas turbine engine comprising a low pressure spool, a high pressure spool and a fuel metering valve, the method comprising scheduling the fuel metering valve in dependence upon a lagged rate of change of the high pressure spool speed, whereby the lagged rate of change of the high pressure spool is calculated from measured high pressure spool speed, which is then lagged with an appropriate time constant, before being differentiated. As will be appreciated the scheduling may further depend on other factors. Furthermore the scheduling may depend upon high pressure spool speed only in particular circumstances (e.g. when the engine is operating in a particular manner or regime e.g. transient operation or during an engine start and initial acceleration procedure).

Scheduling fuel metering in dependence upon the speed of the high pressure spool may help to prevent over fuelling of the engine and consequent increased risk of stall of a high pressure compressor of the high pressure spool. The scheduling may for instance mean that additional fuel is delivered only when sufficient high pressure compressor stall margin is available. Further, it may be that a fuel pump of the engine is driven by an alternative spool to the high pressure spool. In such cases, scheduling in dependence on the speed of the high pressure spool rather than the speed of a spool driving the fuel pump may mean that there is no need to tailor the scheduling to the specific design and characteristics of the fuel pump. In this way, alterations to the fuel pump used may be immaterial in terms of the scheduling used and the scheduling may be applicable across different fleets of engines despite each fleet employing a fuel pump design having different characteristics.

In some embodiments the method comprises scheduling the fuel metering valve to an over-fuelling position with respect to a fuel flow necessary for ignition of the engine prior to an attempted ignition during an engine in-flight windmill start procedure. It may be that the over-fuelling position of the fuel metering valve exceeds the fuel supply deliverable by the fuel pump at that time. This may in occur in particular because the engine is windmilling and so the fuel pump is driven only by a windmilling spool,With the fuel metering valve no longer giving rise to a pressure drop, the pressure in a fuel system for the engine may be reduced. Consequently any parasitic fuel losses to other systems which use the fuel as a process fluid may be reduced. The reduction in parasitic fuel losses may increase fuel flow to a combustor of the engine to (or nearer to) a nominal level of fuel that would be necessary in order to sustain combustion with the engine running at the windmill speed. As will be appreciated this method allows for a potential increase in fuel delivery to the combustor during an engine in-flight windmill start procedure for a given fuel pump capacity. Further this is achieved without the need for a structural/architectural change to the engine.

In some embodiments the scheduling of the fuel metering valve to an over-fuelling position is employed following a failed ignition attempt during the in-flight engine windmill start procedure. Additionally or alternatively the scheduling of the fuel metering valve to an over-fuelling position may be employed where the engine is operating in a particular regime (e.g. ambient airspeed and pressure meet particular criteria). Additionally or alternatively the elapse of a particular time (e.g. approximately 10 seconds) during which successful ignition has not occurred may be a criteria for employment of the over-fuelling position. Any of these conditions may be used as indicative of a requirement for an increase in fuel flow for successful ignition to occur.

In some embodiments the position of the fuel metering valve is scheduled such that the degree of over-fuelling corresponding thereto is increased over time. It may be for instance that the fuel metering valve is progressively opened (either in discrete steps or continuously) over a given period. As will be appreciated the rate of such a change may be constant or may vary. It may be that the rate of change is determined in accordance with the fuel metering valve position that will achieve the minimum combustor fuel flow required to attain ignition for an end of life fuel pump as well as a predetermined period in which this condition should be reached. As will be appreciated the ramping of the fuel metering valve may mean that fuel is delivered in increasing quantities only to a level that is necessary. This may help to avoid over fuelling and high pressure compressor stall following successful engine ignition.

In some embodiments the rate of increase is scheduled in dependence upon the speed of the high pressure spool, optionally more specifically the rate of change of the high pressure spool speed and optionally still more specifically a lagged rate of change of the high pressure spool speed. Factoring in the high pressure spool speed may allow better protection of the high pressure compressor stall margin whilst the fuel metering valve is scheduled for over-fuelling and before engine ignition.

In some embodiments scheduling in dependence upon the speed of the high pressure spool is employed during engine acceleration. In the context of engine acceleration the method may offer an advantageous solution for scheduling a controlled and stable acceleration and reducing the likelihood of a high pressure compressor stall.

In some embodiments scheduling in dependence upon the speed of the high pressure spool is employed during engine acceleration from ignition.

In some embodiments scheduling in dependence upon the speed of the high pressure spool is employed during engine acceleration from ignition occurring during an in-flight engine windmill start procedure. The engine may be particularly vulnerable to high pressure compressor stall during initial engine acceleration following a windmill start procedure ignition, especially where the fuel metering valve is initially set to an over-fuelling position in order to increase fuel flow and assist ignition.

In some embodiments scheduling of the fuel metering valve in dependence upon the speed of the high pressure spool is more specifically in dependence upon the rate of change of the high pressure spool speed. The rate of change of the high pressure spool speed may be a good indicator of high pressure compressor stall margin.

The scheduling of the fuel metering valve in dependence upon the rate of change of the high pressure spool speed is in dependence upon a lagged rate of change of the high pressure spool speed. The introduction of the lag may reduce the impact of noise and anomalies in a determined high pressure spool speed.

In some embodiments the fuel metering valve is scheduled to move from a more open position to a more closed position, whereby the extent and/or rate of its closing is dependent on the lagged rate of change of the high pressure spool speed. Closing somewhat the fuel metering valve may reduce the rate of acceleration of the engine and may therefore prevent a high pressure compressor stall. By accounting for the lagged rate of change of the high pressure spool speed, a proportionate extent and/or rate of fuel metering valve closure may be selected.

In some embodiments the method comprises scheduling the fuel metering valve such that there is a decreased or zero rate of closing where the lagged rate of change of the high pressure spool speed is below a threshold and an increased rate of closing when it is above the threshold. Such scheduling may allow a relatively unhindered initial acceleration of the engine following an in-flight engine windmill start procedure ignition. This may allow the fuel delivered to reach more quickly a nominal delivery expected for the engine windmill rate had the engine been running normally at that rate. It may also reduce the likelihood of engine flameout shortly after ignition as a consequence of fuel starvation. Thereafter an increased rate of closing may prevent rapid acceleration caused by over-fuelling, particularly where the fuel metering valve has been scheduled to an over-fuel position to assist ignition. Once the start procedure is complete, with an initial stable acceleration achieved, conventional scheduling of the fuel metering valve may be undertaken without the lagged rate of change of the high pressure spool speed acting as a control parameter. Alternatively the lagged rate of change of the high pressure spool speed may continue to be used as a parameter in scheduling of the fuel metering valve.

According to a second aspect there is provided a gas turbine engine comprising a low pressure spool, a high pressure spool, a fuel metering valve and a fuel flow controller, the controller being arranged in use to schedule the fuel metering valve in dependence upon the speed of the high pressure spool, whereby the lagged rate of change of the high pressure spool is calculated from measured high pressure spool speed, which is then lagged with an appropriate time constant, before being differentiated.

According to a third aspect there is provided a gas turbine engine fuel flow controller arranged for use in a gas turbine engine having a low pressure spool, a high pressure spool and a fuel metering valve, the controller being arranged in use to schedule the fuel metering valve in dependence upon the speed of the high pressure spool, whereby the lagged rate of change of the high pressure spool is calculated from measured high pressure spool speed, which is then lagged with an appropriate time constant, before being differentiated.

Embodiments of the invention will now be described by way of example only, with reference to the Figures, in which:
**Figure 1** is a sectional side view of a gas turbine engine;
**Figure 2** is a schematic view of a gas turbine engine fuel system;
**Figure 3** is flow diagram showing an engine in-flight windmill start procedure in accordance with an embodiment of the invention;
**Figure 4** is an exemplary fuel metering valve ramp opening schedule in accordance with an embodiment of the invention;
**Figure 5** is an exemplary fuel metering pull-off schedule in accordance with an embodiment of the invention.

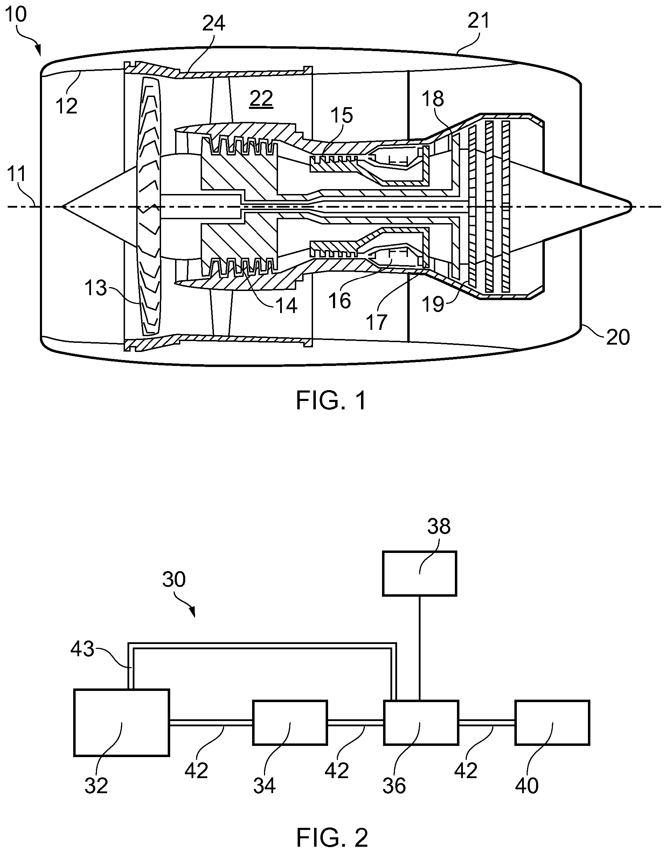

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzles 20. A nacelle 21 generally surrounds the engine 10 and defines both the intake 12 and the exhaust nozzles 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzles 20 to provide additional propulsive thrust. The high 17, intermediate 18 and low 19 pressure turbines drive respectively the high pressure compressor 15, intermediate pressure compressor 14 and fan 13, each by suitable interconnecting shaft. The high pressure compressor 15, turbine 17 and interconnecting shaft form a high pressure spool, the intermediate pressure compressor 14, turbine 18 and interconnecting shaft form an intermediate pressure spool and the fan 13, low pressure turbine 19 and interconnecting shaft form a low pressure spool.

Referring now to Figure 2, parts of a fuel system for the engine 10, generally shown at 30, are discussed. The fuel system 30 comprises a fuel tank 32, a fuel pump 34, a fuel metering valve 36, a fuel flow controller (in this case an engine electronic controller (EEC) 38 of a full authority digital engine control (FADEC)) and combustor fuel spray nozzles 40. The fuel tank 32, fuel pump 34, fuel metering valve 36 and nozzles 40 are connected in series by fuel conduits 42. A fuel return loop 43 is also provided to spill excess fuel back to the fuel tank 32. Additional fueldraulic conduit loops (not shown) branch off from the fuel conduits 42 upstream of the fuel metering valve 36 for delivery of fuel for use in additional engine 10 components. The fuel pump 34 is connected to and in use is driven by the intermediate pressure spool (although in alternative embodiments the fuel pump is connected to and in use is driven by the high pressure spool). The connection between the fuel pump 34 and intermediate pressure spool is via an ancillary gearbox (not shown). In use of the fuel system 30, the fuel pump 34, driven by the intermediate pressure spool, delivers fuel from the fuel tank 32 to the fueldraulic conduit loops as well as to the nozzles 40 via the fuel metering valve 36. The EEC 38 controls the fuel metering valve 36 position (and so fuel delivery to the nozzles 40) in accordance with a thrust demand (selected for example via a cockpit power lever) and one or more fuel metering schedules. Fuel metering schedules are used to trim fuel metering, particularly where the engine is operating under certain conditions and/or in certain regimes.

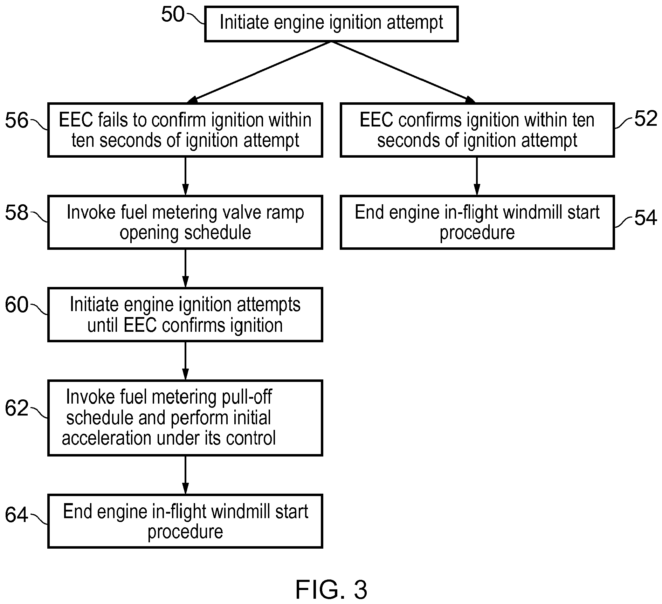

Referring now to Figure 3, an engine in-flight windmill start procedure suitable for an engine as previously discussed with respect to Figures 1 and 2 is explained. Under windmill conditions the engine 10 is not running. Nonetheless on-rushing air passing through the engine 10 turns the low, intermediate and high pressure spools. As a consequence of this windmill turning of the intermediate pressure spool, the fuel pump 34 is operated and can deliver fuel to the nozzles 40 under the control of the fuel metering valve 36 as well as to the fueldraulic conduit loops. As will be appreciated however the fuel deliverable by the pump 34 is relatively low as a consequence of the relatively slow windmill speed of the intermediate pressure spool. Furthermore as ambient air pressure increases (associated with lower altitude operation) and/or engine 10 airspeed drops, the windmill speed of the intermediate pressure spool will decrease, reducing further the fuel deliverable by the fuel pump 34 to the nozzles 40.

With sufficient altitude and/or airspeed, sufficient fuel may be deliverable to the nozzles 40 for ignition and initial acceleration of the engine 10 without additional fuel delivery assistance. Thus as an initial step 50 of the engine in-flight windmill start procedure, the EEC 38 initiates an engine ignition attempt. The EEC 38 then monitors the engine to detect whether the ignition attempt has been successful and the engine is running. If within ten seconds of the ignition attempt the EEC 38 confirms successful ignition (step 52), normal engine acceleration is scheduled up to an idle speed before the engine in-flight windmill start procedure is ended (step 54) and normal engine running is resumed including standard fuel metering. If, on the other hand, the EEC 38 fails to confirm successful ignition within 10 seconds of the ignition attempt (step 56) a fuel metering valve ramp opening schedule is initiated (step 58).

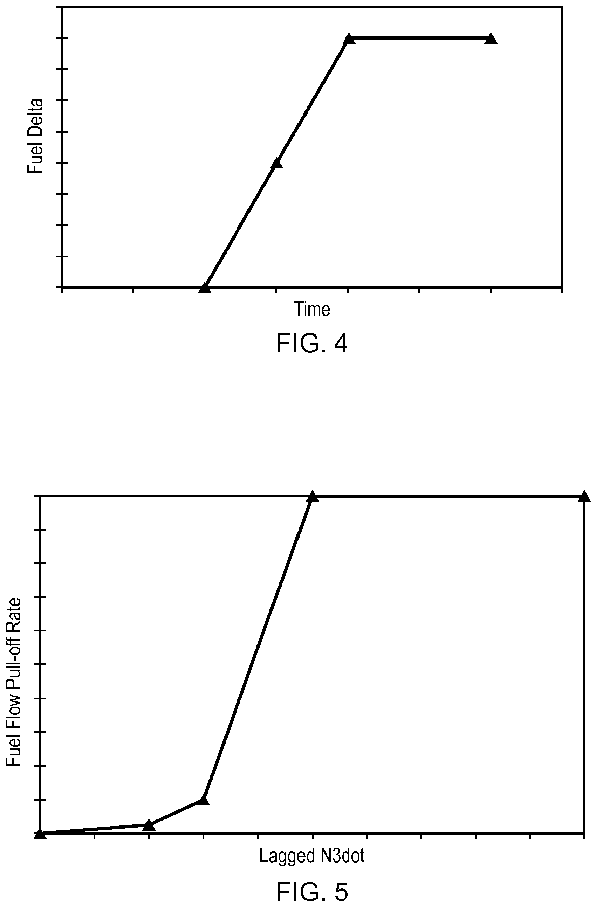

An exemplary fuel metering valve ramp opening schedule employed here is shown in Figure 4. The schedule demands a continuous opening of the fuel metering valve 36 over time. The opening of the valve gives rise to an ever increasing over-fuelling fuel metering valve 36 position with respect to a fuel flow necessary for ignition of the engine 10. Because relatively slow operation of the fuel pump 34 is the principle limiting factor in the fuel deliverable to the nozzles 40, the ever greater opening of the fuel metering valve 36 is unlikely to give rise to a corresponding and proportional increase in fuel delivered to the nozzles 40. Nonetheless the ever greater opening of the fuel metering valve 36 tends to reduce the pressure in the fuel system 30 and consequently correspondingly reduce fuel losses to the fueldraulic conduit loops. This in turn increases the proportion of the fuel pumped by the fuel pump 34 that is delivered to the nozzles 40. As the fuel metering ramp opening schedule is invoked, successive engine ignition attempts are initiated at intervals until successful ignition is confirmed by the EEC 38 (step 60). It may therefore be that anywhere from one to several additional engine ignition attempts are necessary.

The steady ramping of the opening of the fuel metering valve 36 and periodic ignition attempts may mean that the extent of the over-fuelling position is only as substantially great as is necessary in order to provide a sufficient increase in fuel for successful engine 10 ignition. This may be preferable to a rapid and complete opening of the fuel metering valve 36 followed by an engine ignition attempt, as this may unnecessarily increase the degree of over-fuelling subsequent to ignition.

The shape of the fuel metering valve ramp opening schedule may have a fixed predetermined shape or may be variable. In the event that the fuel metering valve ramp opening schedule is variable, its shape and particularly its gradient may be determined in accordance with the particular operating conditions of the engine 10. It may be for example that where the engine 10 has a slower airspeed and/or lower altitude, a fuel metering valve ramp opening schedule is calculated by the EEC 38 that requires a more rapid over-fuelling position increase in recognition of the greater likely extent of any shortfall in fuel necessary for ignition.

Once the EEC 38 has confirmed successful engine 10 ignition a fuel metering pull-off schedule is invoked (step 62) in place of the fuel metering valve ramp opening schedule. An exemplary fuel metering pull-off schedule employed here is shown in Figure 5. The fuel metering pull-off schedule determines the extent of the closing of the fuel metering valve 36 throughout the remainder of the engine in-flight windmill start procedure via EEC 38 control of the fuel metering valve 36.

The fuel metering pull-off schedule varies the position of the fuel metering valve 36 in dependence upon a lagged rate of change of the high pressure spool speed. The lagged rate of change of the high pressure spool speed is calculated from measured high pressure spool speed, which is then lagged with an appropriate time constant, before finally being differentiated. The lag is a convenient way to remove noise on the input signal and therefore provides some damping to avoid large oscillatory behaviour.

The fuel metering pull-off schedule generally reduces fuel delivered as the lagged rate of change of the high pressure spool speed increases. Nonetheless where the lagged rate of change of the high pressure spool speed indicates a relatively slow acceleration of the engine 10 the fuel delivery reduction in accordance with the schedule is lower than where it indicates a relatively rapid acceleration. The action of the fuel metering pull-off schedule tends to counteract an over-fuelling condition otherwise tending to result from the over-fuelling position of the fuel metering valve 36 brought about by step 58. Such over-fuelling might otherwise give rise to rapid acceleration of the engine 10, potentially causing a high pressure compressor 15 stall. By linking the fuel metering valve 36 position during initial acceleration to the rate of change of the high pressure spool speed, high pressure compressor stall may be avoided whilst allowing the engine 10 to accelerate following ignition. Furthermore the relatively restrained closing of the fuel metering valve 36 dictated by the fuel metering pull-off schedule where the engine 10 is accelerating relatively slowly (e.g. immediately after ignition) may allow fuel delivered to reach more quickly a nominal delivery expected for the engine windmill rate had the engine 10 been running normally at that rate.

The use of the lagged rate of change of the high pressure spool speed rather than simply the rate of change of the high pressure spool speed has the advantage that the impact of signal noise is reduced before differentiation of the signal is undertaken. The differentiation tends to amplify any oscillatory behaviour, so the pre-lagging of the signal is particularly advantageous.

The end of the engine in-flight windmill start procedure (step 64) occurs when the engine has accelerated to an idle speed. Thereafter scheduling in dependence upon the lagged rate of change of the high pressure spool speed is ceased (i.e. a delta associated with the fuel metering pull-off scheduling is removed) and standard scheduling is performed.

It will be understood that the invention is not limited to the embodiments above-described and various modifications and improvements can be made without departing from the concepts described herein.

## Claims

1. A method of controlling fuel flow for combustion in a gas turbine engine (10) comprising a low pressure spool (13,19), a high pressure spool (15, 17) and a fuel metering valve (36), **characterised in that** the method comprises scheduling the fuel metering valve in dependence upon a lagged rate of change of the high pressure spool speed, whereby the lagged rate of change of the high pressure spool is calculated from measured high pressure spool speed, which is then lagged with an appropriate time constant, before being differentiated.

2. The method according to claim 1 further comprising scheduling the fuel metering valve (36) to an over-fuelling position with respect to a fuel flow necessary for ignition of the gas turbine engine (10) prior to an attempted ignition during an engine in-flight windmill start procedure.

3. The method according to claim 2 where the scheduling of the fuel metering valve (36) to an over-fuelling position is employed following a failed ignition attempt during the engine in-flight windmill start procedure.

4. The method according to claim 2 or claim 3 where the position of the fuel metering valve (36) is scheduled such that the degree of over-fuelling corresponding thereto is increased over time.

5. The method according to any preceding claim where the scheduling in dependence upon the speed of the high pressure spool is employed during engine acceleration.

6. The method according to any preceding claim where the scheduling in dependence upon the speed of the high pressure spool (15, 17) is employed during engine acceleration from ignition.

7. The method according to any preceding claim where the scheduling in dependence upon the speed of the high pressure spool (15, 17) is employed during engine acceleration from ignition occurring during an in-flight engine windmill start procedure.

8. The method according to any preceding claim where the fuel metering valve (36) is scheduled to move from a more open position to a more closed position, whereby the extent and/or rate of its closing is dependent on the lagged rate of change of the high pressure spool speed.

9. The method according to any preceding claim where scheduling the fuel metering valve (36) such that there is a decreased or zero rate of closing where the lagged rate of change of the high pressure spool speed is below a threshold and an increased rate of closing when it is above the threshold.

10. A gas turbine engine fuel flow controller arranged for use in a gas turbine engine having a low pressure spool, a high pressure spool and a fuel metering valve, **characterised in that** the fuel flow controller is arranged in use to schedule the fuel metering valve in dependence upon a lagged rate of change of the high pressure spool speed, whereby the lagged rate of change of the high pressure spool is calculated from measured high pressure spool speed, which is then lagged with an appropriate time constant, before being differentiated.

11. A gas turbine engine having a gas turbine engine fuel flow controller according to claim 10.

## Patentansprüche

1. Verfahren zum Steuern des Kraftstoffstroms für die Verbrennung in einem Gasturbinentriebwerk (10), umfassend eine Niederdruckwelle (13, 19), eine Hochdruckwelle (15, 17) und ein Kraftstoffdosierventil (36), **gekennzeichnet dadurch, dass** das Verfahren das Planen des Kraftstoffdosierventils in Abhängigkeit von einer verzögerten Änderungsrate der Hochdruckwellendrehzahl umfasst, wobei die verzögerte Änderungsrate der Hochdruckwelle aus der gemessenen Hochdruckwellendrehzahl berechnet wird, die dann mit einer geeigneten Zeitkonstante vor der Differenzierung verzögert wird.

2. Verfahren nach Anspruch 1, ferner umfassend das Planen des Kraftstoffdosierventils (36) in eine Überbetankungsposition in Bezug auf einen Kraftstoffstrom, der zum Zünden des Gasturbinentriebwerks (10) vor einer versuchten Zündung während eines Windmühlen-Startvorgangs während des Flugs erforderlich ist.

3. Verfahren nach Anspruch 2, bei dem das Planen des Kraftstoffdosierventils (36) in eine Überbetankungsposition nach einem fehlgeschlagenen Zündversuch während des Windmühlen-Startvorgangs während des Flugs angewendet wird.

4. Verfahren nach Anspruch 2 oder Anspruch 3, bei dem die Position des Kraftstoffdosierventils (36) so geplant ist, dass der damit entsprechende Überbetankungsgrad mit der Zeit erhöht wird.

5. Verfahren nach einem vorhergehenden Anspruch, bei dem das Planen in Abhängigkeit von der Drehzahl der Hochdruckwelle während der Triebwerksbeschleunigung eingesetzt wird.

6. Verfahren nach einem vorhergehenden Anspruch, bei dem das Planen in Abhängigkeit von der Drehzahl der Hochdruckwelle (15, 17) während der Triebwerkbeschleunigung von der Zündung eingesetzt wird.

7. Verfahren nach einem vorhergehenden Anspruch, bei dem das Planen in Abhängigkeit von der Drehzahl der Hochdruckwelle (15, 17) während der Triebwerkbeschleunigung aufgrund einer Zündung angewendet wird, die während eines Windmühlen-Startvorgangs während des Fluges auftritt.

8. Verfahren nach einem vorhergehenden Anspruch, bei dem geplant ist, dass das Kraftstoffdosierventil (36) von einer offeneren Position in eine geschlossenere Position übergeht, wobei das Ausmaß und/oder die Geschwindigkeit seines Schließens von der verzögerten Änderungsrate der Hochdruckwellendrehzahl abhängt.

9. Verfahren nach einem vorhergehenden Anspruch, bei dem Planen des Kraftstoffdosierventils (36), sodass es eine verringerte oder Null-Schließrate, wobei die verzögerte Änderungsrate der Hochdruckwellendrehzahl unter einem Schwellenwert liegt, und eine erhöhte Schließrate gibt, wenn sie über dem Schwellenwert liegt.

10. Kraftstoffströmungssteuerung eines Gasturbinentriebwerks, die für die Verwendung in einem Gasturbinentriebwerk mit einer Niederdruckwelle, einer Hochdruckwelle und einem Kraftstoffdosierventil angeordnet ist, **dadurch gekennzeichnet, dass** die Kraftstoffströmungssteuerung in Verwendung angeordnet ist, um das Kraftstoffdosierventil in Abhängigkeit einer verzögerten Änderungsrate der Hochdruckwellendrehzahl zu planen, wobei die verzögerte Änderungsrate der Hochdruckwelle aus der gemessenen Hochdruckwellendrehzahl berechnet wird, die dann mit einer geeigneten Zeitkonstante vor der Differenzierung verzögert wird.

11. Gasturbinentriebwerk mit einer Kraftstoffströmungssteuerung eines Gasturbinentriebwerks nach Anspruch 10.

## Revendications

1. Procédé de commande du flux de carburant pour la combustion dans un moteur à turbine à gaz (10) comprenant une bobine basse pression (13, 19), une bobine haute pression (15, 17) et une soupape de dosage de carburant (36), **caractérisé en ce que** le procédé comprend la régulation de la soupape de dosage de carburant en fonction d'un taux de changement retardé de la vitesse de bobine haute pression, moyennant quoi le taux de changement retardé de la bobine haute pression est calculé à partir de la vitesse de bobine haute pression mesurée, qui est ensuite retardée avec une constante de temps appropriée, avant d'être différencié.

2. Procédé selon la revendication 1, comprenant en outre la régulation de la soupape de dosage de carburant (36) à une position de suralimentation par rapport à un flux de carburant nécessaire pour l'allumage du moteur à turbine à gaz (10) avant une tentative d'allumage durant une procédure de démarrage en autorotation de moteur en vol.

3. Procédé selon la revendication 2, ladite régulation de la soupape de dosage de carburant (36) à une position de suralimentation étant utilisée à la suite d'une tentative d'allumage ratée durant la procédure de démarrage en autorotation de moteur en vol.

4. Procédé selon la revendication 2 ou 3, ladite position de la soupape de dosage de carburant (36) étant régulée de sorte que le degré de suralimentation correspondant à celle-ci augmente avec le temps.

5. Procédé selon l'une quelconque des revendications précédentes, ladite régulation en fonction de la vitesse de bobine haute pression étant utilisée durant l'accélération du moteur.

6. Procédé selon l'une quelconque des revendications précédentes, ladite régulation en fonction de la vitesse de bobine haute pression (15, 17) étant utilisée durant l'accélération du moteur depuis l'allumage.

7. Procédé selon l'une quelconque des revendications précédentes, ladite régulation en fonction de la vitesse de bobine haute pression (15, 17) étant utilisée durant l'accélération du moteur depuis l'allumage se produisant durant une procédure de démarrage en autorotation de moteur en vol.

8. Procédé selon l'une quelconque des revendications précédentes, ladite soupape de dosage de carburant (36) étant régulée pour se déplacer à partir d'une position plus ouverte vers une position plus fermée, moyennant quoi l'étendue et/ou le taux de sa fermeture dépendent du taux de changement retardé de la vitesse de bobine haute pression.

9. Procédé selon l'une quelconque des revendications précédentes, ladite régulation de la soupape de dosage de carburant (36) de sorte qu'un taux de fermeture soit réduit ou nul où le taux de changement retardé de la vitesse de bobine haute pression est inférieur à un seuil et un taux de fermeture soit accru lorsqu'il est au-dessus du seuil.

10. Dispositif de commande de flux de carburant pour moteur à turbine à gaz agencé pour être utilisé dans un moteur à turbine à gaz possédant une bobine basse pression, une bobine haute pression et une soupape de dosage de carburant, **caractérisé en ce que** le dispositif de commande de flux de carburant est agencé lors de l'utilisation pour réguler la soupape de dosage de carburant en fonction d'un taux de changement retardé de la vitesse de bobine haute pression, moyennant quoi le taux de changement retardé de la bobine haute pression est calculé à partir de la vitesse de bobine haute pression mesurée, qui est ensuite retardée avec une constante de temps appropriée, avant d'être différenciée.

11. Moteur à turbine à gaz possédant un dispositif de commande de flux de carburant de moteur à turbine à gaz selon la revendication 10.
